# EUROPEAN PATENT APPLICATION

(11) **EP 2 444 760 A2**
(43) Date of publication of application: **25.04.2012**
(21) Application number: 11250853.6
(22) Date of filing: 18.10.2011
(51) Int. Cl.: F25B 39/04

(54) **Condensor cooling in refrigeration circuits**

(30) Priority: 23.10.2010 GB 1018020
(71) Applicant: Ebac Limited, Newton Aycliffe Durham DL5 6SR (GB)
(72) Inventor: Elliott, John Malcolm, Newton Aycliffe, Durham DL5 6SR (GB)
(74) Representative: Craske, Stephen Allan

(57) **Abstract**

A low capacity refrigeration circuit of the kind commonly found in refrigerators or water coolers has a compressor 2 which circulates a refrigerant through a condenser 3, a pressure reducer 4 and an evaporator 5. The condenser is surrounded by a static water jacket 11 contained within a housing 10 which is exposed to the air, preferably with cooling fins 12.

## Description

### TECHNICAL FIELD OF THE INVENTION

This invention relates to the cooling of condensers in refrigeration circuits.

### BACKGROUND

In relatively low capacity refrigeration circuits such as those used in domestic refrigerators and water coolers a compressor circulates a refrigerant through a condenser, a pressure reducer (expansion device) and an evaporator. The evaporator absorbs heat and the condenser gives out heat, normally by transferring heat passively to the air. Due to common design constraints on the size and configuration of the condenser, the condensing temperature must be relatively high in order to produce a sufficient rate of heat transfer. However, a high condensing temperature reduces the capacity of the refrigeration circuit and increases power consumption.

Another factor which is particularly relevant to low capacity refrigeration systems as used in domestic refrigerators is that they must be designed to operate continuously in order to allow for the refrigerator being filled with warm products all of which need cooling. A continuous high condensing temperature is therefore allowed for in the design of the system.

In refrigeration circuits which are designed for higher duty, e.g. commercial refrigeration systems and air conditioners, larger condensers are used, with bigger cooling fins over which air is blown. This increases the rate of heat transfer due to the larger heat exchange area and the fact that the air in contact with the fins is continuously being replaced by cooler air.

Another option which is sometimes used in some refrigeration systems is pumped water cooling. Water has a higher specific heat than air so that a smaller surface area is required to transfer the same amount of heat to water than to air. The water may be cooled by passage through a water-to-air heat exchanger, following which the water is recirculated back to the condenser. Overall, this is more complicated, costly and less efficient than air cooling, although water cooling may be the preferred method where the condenser size is restricted or where noise at the condenser position is an issue. Such cooling may also be useful where a free source of flowing water is readily available, e.g. from a lake, river or sea, so that recirculation and cooling is not necessary.

The present invention seeks to provide a refrigeration system which is suitable for small capacity systems such as domestic refrigerators, and which is capable of increased efficiency where the size of the condenser is a limiting factor or when noise, cost or other considerations preclude the use of forced air cooling.

### SUMMARY OF THE INVENTION

The present invention proposes a refrigeration circuit of the kind in which a compressor circulates a refrigerant through a condenser, a pressure reducer and an evaporator, in which the condenser is surrounded by a static water jacket contained within a housing which is exposed to the air.

The external surface of the housing is preferably configured such that the surface area in contact with the air is greater than the surface area in contact with the water jacket. This may be achieved by providing the housing with external cooling fins, for example.

### BRIEF DESCRIPTION OF THE DRAWINGS

The following description and the accompanying drawings referred to therein are included by way of non-limiting example in order to illustrate how the invention may be put into practice. In the drawings:

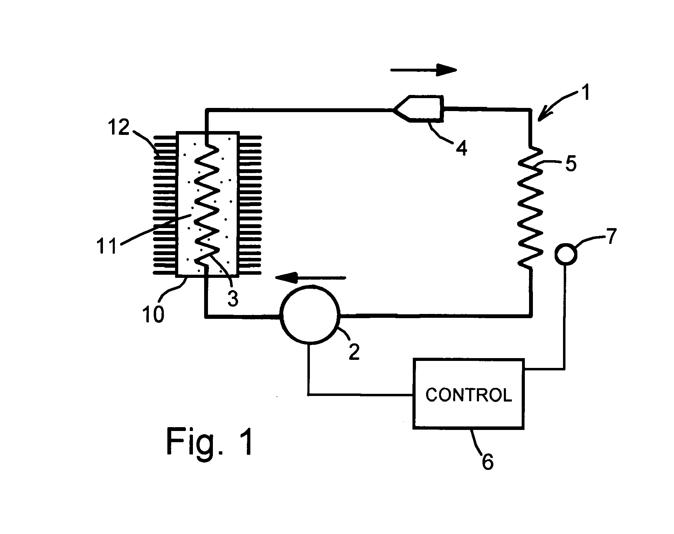

Figure 1 is a diagrammatic representation of a refrigeration circuit in accordance with the invention.

### DETAILED DESCRIPTION OF THE DRAWINGS

**Fig. 1** shows a refrigeration circuit 1 of the kind used in a small refrigerator or water cooler. A mechanical compressor 2 circulates refrigerant vapour under pressure through a condenser 3 and an evaporator 5. The compressor raises the pressure of the refrigerant causing an increase in temperature and pressure. Upon entering the condenser the vapour gives up heat and condenses. The refrigerant then passes through a pressure reducer 4 which reduces the pressure and therefore the temperature of the liquid. When the cooled refrigerant enters the evaporator 5 it absorbs heat, e.g. from ambient air or another heat exchange medium, causing the liquid to evaporate. Refrigerant vapour from the evaporator is re-circulated by the compressor 2 in a continuous cycle of condensation and evaporation, absorbing heat in the evaporator and expelling it at the condenser.

The compressor 2 is operated by an electronic control system 6 which uses a temperature sensor 7 to maintain a steady temperature in the region of the evaporator 5. In some circumstances, for example when a refrigerator is filled with a warm product in a warm external environment, the compressor will run continuously and the temperature of the condenser will increase to the design maximum. In other circumstances the compressor 2 will only run intermittently in order to remove heat gained through the walls of the refrigeration compartment, by entry of warm air when the door is opened, or to cool a new product which has been added.

In the present invention the condenser 3 is contained within a housing 10, which may be formed of a heat-conductive metal such as copper. The housing 10 is filled with water forming a water jacket 11 which bathes the condenser 3. The external surface of the housing 10 is provided with an array of heat-conducting metal fins 12 which act as a heat exchanger, transferring heat from the water to the surrounding air.

The water jacket acts like a kind of thermal flywheel. During the ON cycle when the condenser is running, the heat emitted by the condenser 3 is absorbed by the water jacket. The mass of water in the water jacket should be sufficient to absorb the heat without raising the water to a high temperature. The housing 10 and fins 12 transfer heat from the water jacket to the surrounding air, which continues during the OFF cycle, when the compressor is not running and no heat is being emitted by the condenser, so that when the compressor comes ON again the condenser will be relatively cool. The overall reduction in the condensing temperature which is achieved increases the Coefficient of Performance (COP) by about 30% (i.e. the ratio of cooling duty to power consumed).

A further benefit is that the surface area of the water-to-air interface is normally greater than the refrigerant-to-air surface area on a conventional static air cooled condenser due to the fact that the volume of refrigerant is determined by the refrigeration circuit whereas the volume of water is limited only by the physical size constraints of the water jacket housing. The greater water-to-air surface area therefore means that the condensing temperature will be lower.

The main improvement in efficiency will be found when the compressor runs intermittently, but smaller improvements could also be obtained when the refrigeration system operates continuously, particularly if the water jacket housing is designed for optimum efficiency, i.e. to allow the water jacket to absorb sufficient heat from the condenser and expel it to the atmosphere at a sufficient rate to keep the water jacket cool. Another option would be to design the refrigeration circuit to operate at a lower condensing temperature when the system runs continuously.

By way of comparison, at an ambient air temperature of 20 °C a static air cooled condenser will typically run at 50 °C whereas the present condenser only attains a running temperature of 20 to 30 °C in a typical duty cycle of 15 mins ON and 45 mins OFF. Even under conditions of continuous running a water temperature of 35 °C and a condenser temperature of only 40 °C is achieved.

A static water jacket does not use energy or create noise as compared with recirculation of water or forced air cooling, and the size of the refrigeration system is kept relatively small.

The greatest benefit is likely to be obtained in systems that use static air cooling and in which the power consumption is less than about 350 watts, but under certain circumstances advantages could be obtained in higher power systems with forced air cooling of the water jacket.

Whilst the above description places emphasis on the areas which are believed to be new and addresses specific problems which have been identified, it is intended that the features disclosed herein may be used in any combination which is capable of providing a new and useful advance in the art.

## Claims

1. A refrigeration circuit of the kind in which a compressor (2) circulates a refrigerant through a condenser (3), a pressure reducer (4) and an evaporator (3),
**characterised in that** the condenser (3) is surrounded by a static water jacket (11) contained within a housing (10) which is exposed to the air.

2. A refrigeration circuit according to Claim 1 in which the external surface of the housing (10) is configured such that the surface area in contact with the air is greater than the surface area in contact with the water jacket (11).

3. A refrigeration circuit according to Claim 2 in which the external surface of the housing (10) is provided with cooling fins (12).
